# FASCICULE DE BREVET EUROPEEN

(11) **EP 2 153 274 B1**
(45) Date de publication et mention de la délivrance du brevet: **18.05.2011**
(21) Numéro de dépôt: 08760392.4
(22) Date de dépôt: 03.06.2008
(51) Int. Cl.: G02F 1/13357, H01J 31/12, G02F 1/1335

(54) **DISPOSITIF D'ÉCLAIRAGE POUR ÉCRAN À CRISTAL LIQUIDE**
BELEUCHTUNGSVORRICHTUNG UND FLÜSSIGKRISTALLBILDSCHIRM
LIGHTING DEVICE FOR LIQUID CRYSTAL SCREEN

(30) Priorité: 11.06.2007 FR 0755637
(43) Date de publication de la demande: 17.02.2010
(73) Titulaire: Commissariat à l'Énergie Atomique et aux Énergies Alternatives, 75015 Paris (FR)
(72) Inventeur: DIJON, Jean, F-38800 Champagnier (FR); LEROUX, Thierry, F-14000 Caen (FR)
(74) Mandataire: Esselin, Sophie
(86) Numéro de dépôt international: PCT/EP2008/056808
(87) Numéro de publication internationale: WO 2008/155215

(56) Documents cités:
- EP-A- 1 548 794
- EP-A- 1 775 751
- US-A- 5 061 050
- US-A1- 2004 105 055

## Description

La présente invention concerne un dispositif d'éclairage pour écran à cristal liquide, en particulier pour être utilisé dans des afficheurs à écran plat basse consommation.

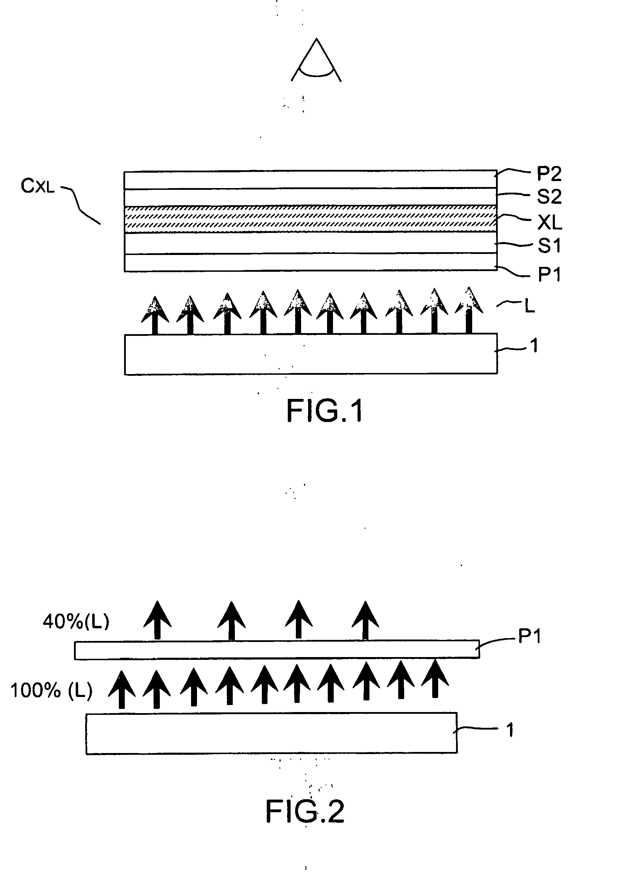

L'invention concerne notamment un dispositif d'éclairage pour des écrans de type transmissif. Comme illustré schématiquement en figure 1, ces écrans comprennent de manière conventionnelle, en partant de leur face arrière vers leur face avant, un polariseur "entrant" P1, un premier substrat transparent S1 dont la face interne porte un réseau d'électrodes de commande, une épaisseur de cristal liquide XL, un deuxième substrat transparent S2 dont la face interne porte une contre-électrode, et éventuellement un réseau de filtres couleur, et un polariseur "sortant" P2, en face avant. Un observateur regarde l'image qui se forme en face avant d'un tel écran. Ces écrans nécessitent un éclairage par l'arrière, c'est à dire un rétro-éclairage.

Selon l'état de l'art, cet éclairage de la face arrière est réalisé au moyen d'une source 1 de lumière non polarisée. Cette source peut être des tubes à néon associés à des dispositifs optiques d'uniformisation du flux lumineux. Une autre technologie utilise des diodes électroluminescentes, associées à une optique complexe apte à mélanger la lumière des différentes diodes pour fournir un flux uniforme étendu de lumière blanche.

On connaît également de la demande EP 1775751, un dispositif de rétroéclairage dont la source de lumière est formée d'un dispositif à effet de champ comportant une couche de phosphore comme surface émissive.

La source de lumière fournit un flux étendu de lumière L vers le polariseur entrant P1 de l'écran C_{XL}. Le polariseur entrant absorbe ainsi théoriquement 50% de la lumière émise par la source L (polariseur dichroïque), pour ne laisser passer que la lumière dans la polarisation correspondante de celle du polariseur. En fait, et comme schématisé sur la figure 2, le taux réel de transmission de lumière par le polariseur entrant est de l'ordre de 40% du flux de lumière L émis par la source, du fait de pertes de transmission dans le polariseur entrant. Pour ces raisons, des sources puissantes, à consommation électrique élevée, sont nécessaires pour réaliser des afficheurs à forte luminance.

Dans l'invention, on a cherché une solution technique permettant d'améliorer le bilan de transmission de lumière, afin de réduire la consommation électrique des afficheurs à cristal liquide, sans dégrader leurs performances notamment en terme de luminance.

Un dispositif d'éclairage répondant à ce besoin a été trouvé dans l'invention, qui comprend un empilement d'éléments optiques, disposés et choisis pour favoriser la transmission d'un flux de lumière polarisée de manière efficace.

L'invention concerne un dispositif d'éclairage diffus pour écran à cristal liquide transmissif, comprenant une source lumineuse d'un flux étendu de lumière non polarisée, caractérisé en ce qu'il comprend une couche diffusante de phosphore présentant un albédo élevé, au moins supérieur à 0,3, à la surface d'émission de lumière de ladite source, et en ce que sur la source est disposé un empilement d'une lame quart d'onde et d'un polariseur réfléchissant, ledit polariseur réfléchissant étant tel que la lumière qui ne traverse pas ledit polariseur est au moins en partie réfléchie via ladite lame vers ladite couche d'albédo élevé.

Le dispositif d'éclairage obtenu est avantageusement compact.

La couche à albédo élevé peut être structurée en bandes de phosphore de différentes couleurs.

Dans un perfectionnement, une couche miroir est placée sous la couche de phosphore, pour réfléchir la lumière vers le polariseur.

L'invention concerne aussi différents modes de réalisation du dispositif portant sur des aspects de structure de la source et/ou du polariseur qui permettent d'améliorer encore le rendement du dispositif d'éclairage.

L'invention concerne également un afficheur comprenant un écran à cristal liquide associé à un dispositif d'éclairage selon l'invention disposé en face arrière.

D'autres avantages et caractéristiques de l'invention sont détaillés dans la description suivante en référence aux dessins illustrés d'un mode de réalisation de l'invention, donné à titre d'exemple non limitatif. Dans ces dessins :
- la figure 1 illustre une structure d'un afficheur à cristal liquide à rétro-éclairage selon l'état de l'art;
- la figure 2 met en évidence le phénomène de perte de lumière dans un tel afficheur;
- les figures 3a et 3b illustrent respectivement un schéma de principe d'un dispositif d'éclairage selon l'invention fournissant en sortie un flux étendu de lumière polarisée, et les trajets optiques de la lumière dans ce dispositif entre la source émettrice de lumière et la surface de sortie;
- la figure 4 illustre un premier mode de réalisation d'un dispositif d'éclairage selon l'invention ;
- la figure 5 illustre un deuxième mode de réalisation d'un dispositif d'éclairage selon l'invention;
- les figures 6a et 6b représentent deux exemples de polariseur réfléchissant du type à facettes réfléchissantes qui peut être utilisé dans un dispositif d'éclairage suivant le deuxième mode de réalisation;
- la figure 7 illustre un troisième mode de réalisation d'un dispositif d'éclairage selon l'invention;
- les figure 8a et 8b illustrent de façon schématique un dispositif à effet de champ respectivement de type diode et triode qui peut être utilisé dans un dispositif d'éclairage selon l'invention; et
- la figure 9 illustre la réponse angulaire d'un polariseur multicouche réfléchissant.

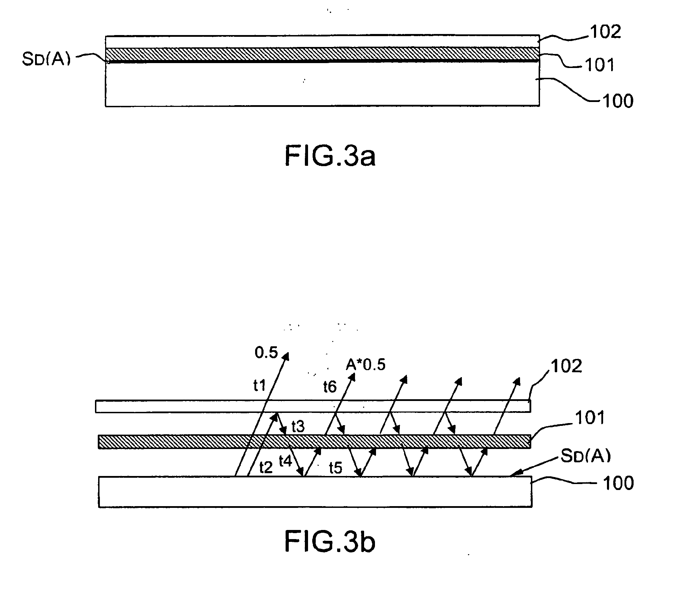

Comme illustré sur les figures 3a et 3b, un dispositif d'éclairage selon l'invention comprend la superposition d'une source de lumière étendue, non polarisée, 100, d'une lame quart d'onde 101 et d'un polariseur réflectif 102.

Dans la source, une surface d'émission SD(A) de la lumière est une couche à fort albédo A.

L'albédo est la mesure de la capacité d'une surface à réfléchir de manière diffuse (c'est-à-dire dans toutes les directions de l'espace) la lumière. Il s'exprime par un chiffre compris entre 0 et 1, correspondant au rapport de la quantité de lumière réfléchie sur la quantité de lumière reçue : une surface qui réfléchit la totalité de la lumière a un albédo de 1, une surface qui l'absorbe à 100% a un albédo de 0. Dans l'invention, on entend par fort albédo A, un albédo supérieur ou égal à 0,3 environ (voire supérieur ou égal à 0,5) : au moins 30% de la lumière reçue est réfléchie, le reste étant absorbé.

Le principe du dispositif est plus particulièrement illustré sur la figure 3b : la lumière non polarisée est émise par la source 100 en direction du polariseur 102. La lumière dont le plan de polarisation de l'onde coïncide avec l'axe de polarisation du polariseur est transmise vers l'extérieur par le polariseur : c'est le trajet optique t1 illustré sur la figure 3b ; Tandis que la lumière dont le plan de polarisation de l'onde est orthogonal à l'axe de polarisation du polariseur (illustré par le trajet t2 sur la figure), est réfléchie par le polariseur en direction de la surface d'émission S_{D}(A) (trajet t3). Sur son trajet t3, la lumière traverse au passage la lame quart d'onde 101 qui fait tourner le plan de polarisation d'environ 45°, avant d'atteindre la surface d'émission S_{D}(A) (trajet t4). Compte tenu du fort albédo de cette surface, celle-ci rediffuse la lumière vers le polariseur 102 (trajet t5). Sur son trajet t5, la lumière retraverse au passage la lame quart d'onde en sorte que son plan de polarisation a tourné au total d'environ 90° lorsqu'elle atteint le polariseur : le plan de polarisation coïncide alors avec l'axe de polarisation du polariseur et la lumière va traverser le polariseur et être transmise à l'extérieur (trajet t6).

Le dispositif d'éclairage selon l'invention fournit ainsi un flux de lumière polarisé en sortie du polariseur 102, avec une perte limitée de lumière dans le dispositif. Selon le principe précédemment décrit, la quantité de lumière transmise par rapport à la quantité L de lumière émise par la source 100 peut s'écrire : L_{T}=(1+A.)0,5.L, où A est l'albédo de la surface d'émission S_{D}(A) de la source 100.

En fait le mécanisme est un peu plus complexe que le principe exposé ci-dessus car on sait que la lame quart d'onde n'introduit un décalage de 45° que pour certaines longueurs d'ondes. Ce décalage est donc différent pour les autres longueurs d'ondes. Néanmoins, la lumière qui n'est pas transmise par le polariseur n'est pas perdue : elle est réfléchie successivement entre la surface d'émission S_{D}(A) de la source 100 et le polariseur 102 subissant un décalage à chaque passage de la lame quart d'onde, jusqu'à obtenir une polarisation permettant sa transmission à l'extérieur par le polariseur.

Ce phénomène de réflexion multiple permet ainsi d'accroître le rendement lumineux. Ce phénomène permet également de limiter les contraintes de performance de la lame quart d'onde : en effet, il n'est pas nécessaire que le décalage introduit soit très précisément de 45°, puisque tout ce qui n'est pas transmis directement par le polariseur, finira après des réflexions multiples par être transmis (aux pertes près).

Si on associe une telle source à un écran à cristal liquide selon l'assemblage illustré sur la figure 1, en considérant que le polariseur 102 constitue le polariseur entrant P1, on réalise ainsi un gain de (1+A) en transmission de lumière par rapport à l'état de l'art, en négligeant les pertes dans le polariseur lui-même (de l'ordre de 10%). On notera que l'on peut aussi conserver le polariseur entrant de l'écran.

Un dispositif d'éclairage selon l'invention permet qu'un flux de lumière plus puissant arrive sur l'écran, à puissance électrique égale.

A luminance égale, on a une réduction de la consommation électrique de l'afficheur dans les mêmes proportions, par rapport à l'état de l'art.

Dans la suite, sont détaillés à titre illustratif trois exemples de réalisation d'un dispositif d'éclairage selon l'invention. Par souci de simplification, dans les figures, les mêmes éléments portent les mêmes références.

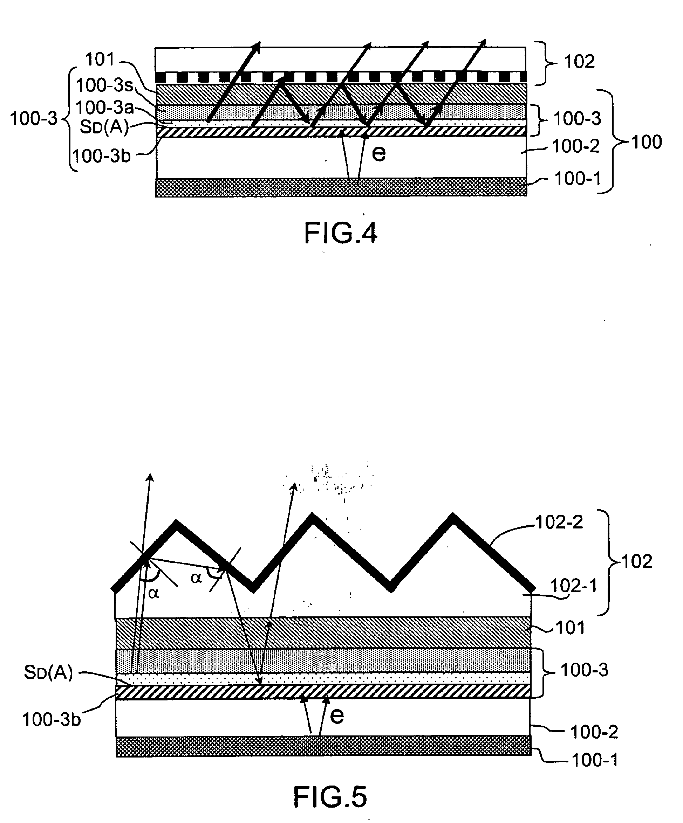

La figure 4 illustre un premier exemple de réalisation, dans lequel la source de lumière 100 est un dispositif à émission de champ combiné à une couche de phosphore, qui transforme les électrons émis en photons. Plus généralement, la source de lumière 100 est un dispositif comportant une couche de phosphore apte à générer des photons à partir d'un signal électrique, soit par catholuminescence, les phosphores transformant dans ce cas des électrons incidents en photons, soit par luminescence, les phosphores transformant dans ce cas un rayonnement UV en photons (source plasma). Dans le cas d'un dispositif à émission de champ, celui-ci comprend de manière habituelle une cathode 100-1 qui comprend les émetteurs d'électrons e, et une anode transparente 100-3 en regard, à distance de la cathode, l'anode et la cathode étant séparées par un espace 100-2 dans lequel le vide a été fait. Une tension électrique Va, typiquement 10000 à 15000 Volts, est appliquée entre l'anode et la cathode pour permettre l'émission des électrons sous l'effet du fort champ électrique. La couche de phosphore est référencée 100-3b dans l'exemple et disposée sur l'anode 100-3, faisant face aux émetteurs d'électrons. Les électrons émis par les émetteurs et dirigés vers l'anode sous l'effet d'un champ électrique appliqué entre l'anode et la cathode, viennent bombarder la couche de phosphore, qui émet des photons par absorption d'électrons suivant le phénomène de cathode luminescence bien connu.

Un albédo typique d'une couche de phosphore est de l'ordre de 0,5. L'albédo est fonction du matériau de la couche de phosphore. Parmi les matériaux possibles, on peut citer par exemple Y₂O₂S: Eu, ZnS : CuAl, Y₂SiO₅: Tb, Y₂SiO₅: Ce, Y₂O₃: Eu, AℓN: Eu. La surface d'émission SD(A) à fort albédo selon l'invention (figures 3a,3b) correspond ainsi typiquement à la surface de cette couche de phosphore.

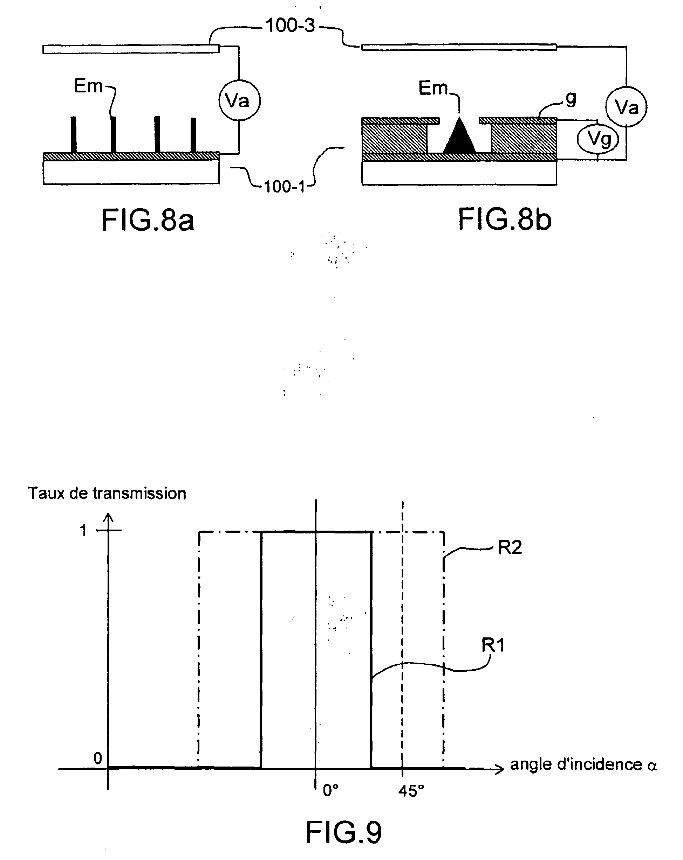

On remarquera que la figure 4 illustre plus particulièrement un dispositif à émission de champ dit de type diode, c'est à dire à deux électrodes de commande : la cathode et l'anode. Un exemple d'une telle structure diode est plus particulièrement détaillé sur la figure 8a, pour une cathode froide, avec des nanotubes de carbone comme émetteurs.

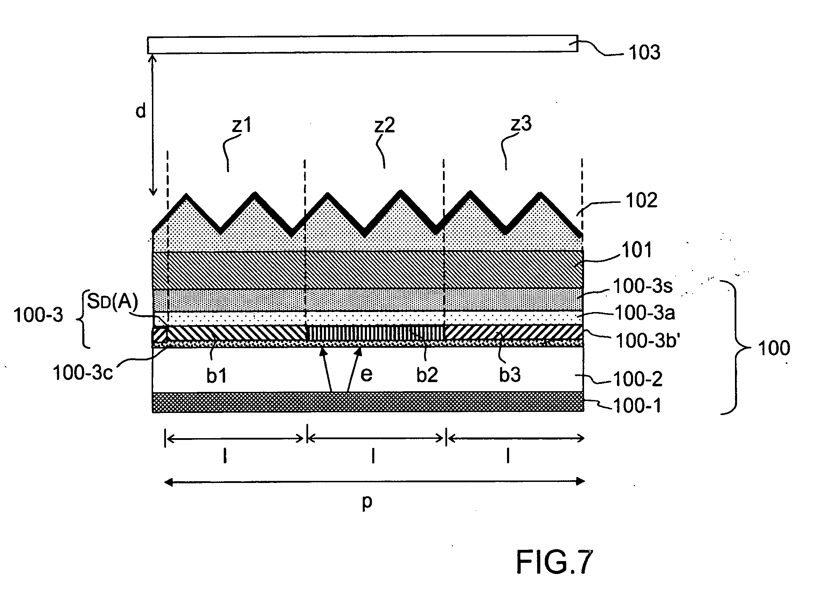

Mais on peut préférer utiliser dans le dispositif d'éclairage selon l'invention un dispositif à effet de champ à structure triode. Une telle structure est illustrée sur la figure 8b, dans le cas d'une cathode froide, avec des micropointes comme émetteurs, par exemple des micropointes de molybdène (les structures triode et diode peuvent aussi bien être utilisées avec des nanotubes de carbone qu'avec des micropointes). De manière bien connue la structure triode comprend une grille g disposée à proximité des émetteurs, entre les émetteurs et l'anode, qui facilite l'extraction des électrons à plus faible tension électrique Vg appliquée sur la grille, typiquement 100 volts, le champ électrique entre cathode et anode permettant de diriger ces électrons vers l'anode. Une telle structure triode permet en outre dans une variante de moduler par zones le courant émis par la cathode, en prévoyant une structure de cathode à grille matricielle, avec autant d'éléments de grille g individuellement contrôlables que de zones, comme par exemple décrit dans la demande de brevet FR 2 873 852. On verra plus loin en relation avec la figure 7 l'intérêt d'une telle structure triode dans un dispositif d'éclairage selon l'invention.

En pratique, et comme illustré sur la figure 4, l'anode 100-3 est typiquement réalisée à partir d'un support transparent 100-3s, sur laquelle une couche conductrice transparente 100-3a est déposée, par exemple une couche en ITO, pour former l'électrode "anode" proprement dite, à laquelle une tension est appliquée (Va, figure 8a-8b), puis la couche de phosphore 100-3b.

La lame quart d'onde 101 centrée dans la gamme d'émission des phosphores est typiquement un film polymère (disponible dans le commerce), qui est collé sur la face supérieure du support 103-s de l'anode.

Le polariseur réfléchissant est dans l'exemple illustré un polariseur à grille. Un tel polariseur est bien connu. On pourra notamment se référer au document WO 2007/044028. Il comprend typiquement des bandes métalliques sous forme de traits fins, régulièrement espacés, et obtenus par exemple par gravure. Le pas de la grille est déterminé pour optimiser l'efficacité de la réflexion et de la polarisation. Il est typiquement de l'ordre de 0,2 µm (micromètre). L'homme de l'art sait réaliser de cette manière un polariseur de très bonnes performances de polarisation, spectrales et angulaires, en fonction de la gamme de longueurs d'onde désirée (selon l'application concernée).

La figure 5 illustre un deuxième mode de réalisation d'un dispositif d'éclairage selon l'invention, qui diffère du précédent dans la constitution du polariseur réfléchissant. Ici le polariseur réfléchissant comprend une structure à facettes réfléchissantes. Il est typiquement formé par une structure à reliefs, par exemple une couche épaisse de polymère moulé, typiquement 1 mm, sur laquelle sont déposées plusieurs couches optiques minces diélectriques formant un empilement optique. L'avantage de ce type de polariseur par rapport au polariseur à grille est que les couches optiques sont déposées pleine plaque. Ce polariseur qui ne nécessite pas de gravure précise peut donc être obtenu à moindre coût sur des grandes surfaces. La structure à relief peut être constituée de pyramides typiquement de 1 millimètre de base et d'angle à la base d'environ 45°. L'empilement optique est choisi (choix des matériaux/épaisseurs) en sorte de réaliser sur cette structure en relief un polariseur réfléchissant à 45°. L'angle à la base, le pas ainsi que l'empilement peuvent facilement être optimisés par l'homme du métier en fonction de la gamme spectrale des phosphores.

La figure 9 illustre le principe d'un polariseur à 45°. Le rayon lumineux se compose de 2 composantes orthogonales (en général dénommées s et p) contenant chacune 50% de l'énergie. Les courbes R2 et R1 représentent la transmission respective de ces 2 composantes en fonction de l'angle d'incidence. On peut constater qu'autour de 45°, seule une des 2 composantes est transmise, l'autre étant quant à elle réfléchie.

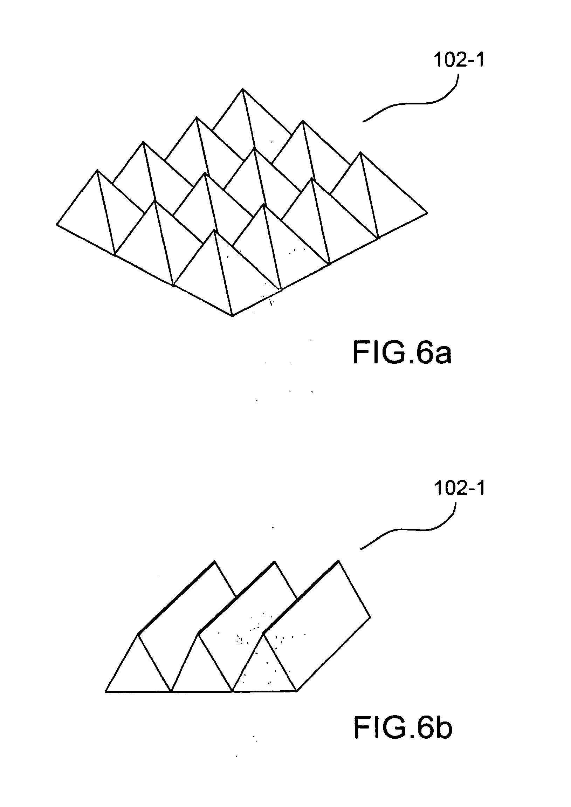

En pratique, et comme illustré sur les figures 5 et 6a, la structure à relief 102-1 qui permet d'obtenir les facettes réfléchissantes peut être comme déjà dit une structure à pyramides à base carrée. Une autre structure à relief possible pour réaliser un tel polariseur réfléchissant est une structure prismatique comme illustré sur la figure 6b, plus simple à réaliser mais moins efficace.

La figure 7 illustre un autre mode de réalisation de l'invention. Dans ce mode de réalisation, la couche de phosphore 100-3b' est structurée en une suite de bandes de phosphores de couleurs différentes. Typiquement on peut avoir ainsi au moins deux types de phosphores qui vont émettre des photons dans des longueurs d'onde différentes. Dans l'exemple illustré, trois phosphores différents sont utilisés pour émettre respectivement dans le rouge, le vert et le bleu. On alterne ainsi successivement, typiquement périodiquement, une bande b1 de phosphore "rouge", une bande b2 de phosphore "bleu", une bande b3 de phosphore " vert "avec un pas p (correspondant à la somme des largeurs l de ces trois bandes).

Comme illustré sur cette même figure 7, le dispositif d'éclairage peut comprendre un polariseur à facettes réfléchissantes et une cathode de la source de lumière du type triode à structure matricielle, permettant une commande différenciée de chaque bande de couleur. On peut ainsi créer des zones z1, z2, z3 de luminances variables en commandant de manière différenciée les différentes zones d'émission de la cathode 100-1 correspondant aux différentes bandes.

Dans un perfectionnement, on traite également l'empilement de couches minces optiques du polariseur de manière différenciée en fonction de ces bandes b1, b2, b3, de manière à obtenir un traitement polarisant et réfléchissant centré et optimisé pour chaque bande, c'est à dire suivant la longueur d'onde émise par les phosphores de la bande correspondante.

On peut également moduler (spatialement) l'éclairement au sein d'une même couleur en fonction du contenu d'une image et donc obtenir des zones z1, z2, z3 de luminances variables spatialement et temporellement : ceci permet avantageusement de réaliser un éclairage couleur optimal dans chaque couleur, pour reconstituer une image couleur : le dispositif d'éclairage selon l'invention est alors une source de lumière polarisée de couleur variable. Dans ce cas, il n'y a plus besoin de filtres colorés dans la structure de l'écran.

De préférence, on prévoit un élément diffuseur 103, disposé au-dessus du polariseur 102 et à distance d, pour moyenner les non-uniformités du flux lumineux coloré émis. La distance d est de l'ordre de grandeur du pas p des bandes de phosphores (p = somme des largeurs l des bandes).

Dans un perfectionnement de l'invention permettant d'augmenter le gain du dispositif, on prévoit sous la couche de phosphore du dispositif d'éclairage, entre cette couche et les émetteurs d'électrons, une couche miroir pour réfléchir les photons vers le polariseur. Une telle couche miroir doit permettre de réfléchir les photons tout en restant transparente pour les électrons. Cette couche peut être par exemple une couche d'aluminium (typiquement de 100 nm). Une couche miroir 100-3c est représentée en exemple dans la structure de la figure 7, sous la couche de phosphore 103-b' (dans la structure d'anode, c'est la dernière couche, face à la cathode).

Dans les structures des figures 4 et 5, cette couche miroir serait réalisée sous la couche 103-b (non illustré). En pratique, le processus de réalisation de l'anode comprend alors une dernière étape de dépôt d'une couche miroir, sur la couche de phosphore.

La combinaison des différents éléments du dispositif d'éclairage diffus qui vient d'être décrit permet de fournir une lumière partiellement polarisée pour l'éclairage arrière d'un écran à cristal liquide et permet de limiter les pertes normalement associées au polariseur entrant de ce dernier. Une énergie lumineuse puissante adaptée aux besoins de luminance élevée des afficheurs est ainsi obtenue, pour une consommation électrique bien moindre que dans les afficheurs de l'état de l'art.

L'invention a été plus particulièrement décrite avec une source de lumière 100 du type à émission de champ et électroluminescence. Le dispositif à émission de champ est de préférence à cathode froide, notamment à nanotubes. Mais l'invention peut être réalisée avec toute technologie de source lumineuse compatible pour fournir une source de lumière étendue, et qui comporte une couche de fort albédo, par exemple une source plasma.

L'invention s'applique notamment de manière avantageuse aux afficheurs de grand format, à forte luminance et basse consommation.

## Revendications

1. Dispositif d'éclairage diffus pour écran à cristal liquide transmissif, comprenant une source lumineuse (100) d'un flux étendu de lumière non polarisée, **caractérisé en ce qu'**il comprend une couche diffusante de phosphore (100-3b) présentant un albédo élevé, au moins supérieur à 0,3, à la surface d'émission S_{D}(A) de lumière de ladite source, et **en ce que** sur la source est disposé un empilement d'une lame quart d'onde (101) et d'un polariseur réfléchissant (102), ledit polariseur réfléchissant étant tel que la lumière qui ne traverse pas ledit polariseur est au moins en partie réfléchie via ladite lame vers ladite couche d'albédo élevé.

2. Dispositif d'éclairage selon la revendication 1, dans lequel ladite couche de phosphore (1 00-3b') est structurée en séries de bandes de phosphores différents (b1, b2, b3), chacun émettant dans une couleur différente.

3. Dispositif d'éclairage selon la revendication 1 ou 2, **caractérisé en ce qu'**il comprend une couche miroir (100-3c) sous la couche de phosphore (100-3b').

4. Dispositif d'éclairage selon l'une des revendications 1 à 3, **caractérisé en ce que** ladite source de lumière (100) est formée par un dispositif à effet de champ associé à ladite couche de phosphore, ledit dispositif à effet de champ comprenant une cathode avec une structure émettrice d'électrons (100-1) et une anode transparente (100-3) en regard, séparées par un espace (100-2) dans lequel le vide a été fait, la couche de phosphore (100-3b) étant formée sur la face inférieure de l'anode faisant face à la cathode.

5. Dispositif d'éclairage selon la revendication 4, **caractérisé en ce que** le dispositif à effet de champ comprend en outre une grille (g) d'extraction des électrons, disposée entre la cathode (100-1) et l'anode (100-3).

6. Dispositif d'éclairage selon la revendication 4 ou 5, dans lequel ladite structure émettrice d'électrons de la cathode (100-1) est une structure à nanotubes de carbone.

7. Dispositif d'éclairage selon l'une quelconque des revendications 1 à 6 précédentes, **caractérisé en ce que** le polariseur réfléchissant (102) est un polariseur à grille.

8. Dispositif d'éclairage selon l'une quelconque des revendications 1 à 6 précédentes, **caractérisé en ce que** le polariseur réfléchissant (102) est un polariseur à facettes réfléchissantes formé par un empilement (102-2) de couches diélectriques minces optiques déposées sur une structure à relief (100-1).

9. Dispositif d'éclairage selon la revendication 8, dans lequel la structure à relief (100-1) est une structure à prismes.

10. Dispositif d'éclairage selon la revendication 8, dans laquelle la structure à relief (100-1) est une structure à pyramides.

11. Dispositif d'éclairage selon la revendication 8 prise en combinaison avec la revendication 2 et la revendication 5, **caractérisé en ce que** la cathode a une structure matricielle, permettant d'adresser une pluralité de zones du polariseur indépendamment, chaque zone correspondant à une bande de phosphore coloré donnée (b1, b2, b3), de manière à obtenir une luminance variable en fonction de la couleur.

12. Dispositif d'éclairage selon la revendication 11, dans lequel le polariseur est optimisé par bande de phosphore, en fonction de la longueur d'onde d'émission de chaque bande.

13. Dispositif d'éclairage selon la revendication 4 ou 12, **caractérisé en ce que** la cathode (100-1) a une structure matricée permettant une commande différenciée spatiale et temporelle à l'intérieur de chaque zone pour moduler l'éclairement en fonction du contenu d'une image.

14. Dispositif d'éclairage selon la revendication 13, **caractérisé en ce qu'**il comprend en outre un diffuseur (103) disposé au-dessus du polariseur, côté émission du flux, et à une distance (d) de l'ordre de grandeur du pas (p) des bandes.

15. Afficheur comprenant un écran à cristal liquide et un dispositif d'éclairage selon l'une quelconque des revendications précédentes, ledit dispositif étant assemblé au dit écran à sa face arrière.

## Claims

1. A diffuse lighting device for a transmissive liquid crystal screen, comprising a light source (100) having an extended flux of non-polarised light, **characterised in that** it comprises a diffusing phosphorus layer (100-3b) with high reflectance, at least greater than 0.3, on the light emitting surface S_{D}(A) of said source, and **in that** a stack of a quarter wave plate (101) and a reflecting polariser (102) is disposed on said source, said reflecting polariser being such that the light which does not pass through said polariser is at least partly reflected via said plate towards said high reflectance layer.

2. The lighting device according to claim 1, wherein said phosphorus layer (100-3b') is structured in series of different phosphorus (b1, b2, b3) strips, each emitting in a different colour.

3. The lighting device according to claim 1 or 2, **characterised in that** it comprises a mirror layer (100-3c) underneath the phosphorus layer (100-3b').

4. The lighting device according to any one of claims 1 to 3, **characterised in that** said light source (100) is formed by a field effect device associated with said phosphorus layer, said field effect device comprising a cathode with an electron emitting structure (100-1) and a transparent anode (100-3) opposite, separated by a space (100-2) in which a vacuum has been created, the phosphorus layer (100-3b) being formed on the lower surface of the anode facing the cathode.

5. The lighting device according to claim 4, **characterised in that** the field effect device further comprises an electron extraction grid (g) disposed between the cathode (100-1) and the anode (100-3).

6. The lighting device according to claim 4 or 5, wherein said electron emitting structure of the cathode (100-1) is a carbon nanotubes structure.

7. The lighting device according to any one of claims 1 to 6, **characterised in that** the reflecting polariser (102) is a grid polariser.

8. The lighting device according to any one of claims 1 to 6, **characterised in that** the reflecting polariser (102) is a reflecting facets polariser formed by a stack (102-2) of thin optical dielectric layers deposited on a relief structure (100-1).

9. The lighting device according to claim 8, wherein the relief structure (100-1) is a prism structure.

10. The lighting device according to claim 8, wherein the relief structure (100-1) is a pyramid structure.

11. The lighting device according to claim 8 taken in combination with claim 2 and claim 5, **characterised in that** the cathode has a matrix structure allowing a plurality of zones of the polariser to be addressed independently, each zone corresponding to a given strip of coloured phosphorus (b1, b2, b3), so as to obtain luminance that may vary according to the colour.

12. The lighting device according to claim 11, wherein the polariser is optimised per phosphorus strip as a function of the emitting wavelength of each strip.

13. The lighting device according to claim 4 or 12, **characterised in that** the cathode (100-1) has a matrix structure allowing a differentiated spatial and temporal control inside each zone in order to modulate the lighting as a function of the content of an image.

14. The lighting device according to claim 13, **characterised in that** it further comprises a diffuser (103) disposed above the polariser, on the flux emission side, and at a distance (d) of the order of magnitude of the pitch (p) of the strips.

15. A display comprising a liquid crystal screen and a lighting device according to any one of the preceding claims, said device being assembled on the rear surface of said screen.

## Patentansprüche

1. Diffuse Beleuchtungsvorrichtung für einen transmissiven Flüssigkristallanzeigeschirm, der eine Lichtquelle (100) mit einem erweiterten Fluss von unpolarisiertem Licht umfasst, **dadurch gekennzeichnet, dass** sie eine Phosphorstreuschicht (100-3b) mit hohem Rückstrahlvermögen, wenigstens höher als 0,3, auf die lichtemittierende Fläche S_{D}(A) der Quelle umfasst, und **dadurch**, dass ein Stapel aus einer Viertelwellenplatte (101) und einem reflektierenden Polarisator (102) auf der Quelle angeordnet ist, wobei der reflektierende Polarisator derart ist, dass das Licht, das den Polarisator nicht durchströmt, wenigstens teilweise über die Platte in Richtung der Schicht mit hohem Rückstrahlvermögen reflektiert wird.

2. Beleuchtungsvorrichtung nach Anspruch 1, wobei die Phosphorschicht (100-3b') in Serien von unterschiedlichen Phosphorstreifen (b1, b2, b3) strukturiert ist, die jeweils in einer anderen Farbe emittieren.

3. Beleuchtungsvorrichtung nach Anspruch 1 oder 2, **dadurch gekennzeichnet, dass** sie eine Spiegelschicht (100-3c) unter der Phosphorschicht (100-3b') umfasst.

4. Beleuchtungsvorrichtung nach einem der Ansprüche 1 bis 3, **dadurch gekennzeichnet, dass** die Lichtquelle (100) von einem mit der Phosphorschicht assoziierten Feldeffektbauelement gebildet wird, wobei das Feldeffektbauelement eine Kathode mit einer Elektronenemissionsstruktur (100-1) und gegenüber dieser eine transparente Anode (100-3) umfasst, getrennt durch einen Raum (100-2), in dem ein Vakuum erzeugt wurde, wobei die Phosphorschicht (100-3b) auf der Unterseite der Anode der Kathode zugewandt ausgebildet ist.

5. Beleuchtungsvorrichtung nach Anspruch 4, **dadurch gekennzeichnet, dass** das Feldeffektbauelement ferner ein Elektronenextraktionsgitter (g) umfasst, das zwischen der Kathode (100-1) und der Anode (100-3) angeordnet ist.

6. Beleuchtungsvorrichtung nach Anspruch 4 oder 5, wobei die Elektronenemissionsstruktur der Kathode (100-1) eine Kohlenstoffnanoröhrenstruktur ist.

7. Beleuchtungsvorrichtung nach einem der Ansprüche 1 bis 6, **dadurch gekennzeichnet, dass** der reflektierende Polarisator (102) ein Gitterpolarisator ist.

8. Beleuchtungsvorrichtung nach einem der Ansprüche 1 bis 6, **dadurch gekennzeichnet, dass** der reflektierende Polarisator (102) ein Polarisator mit reflektierenden Facetten ist, der von einem Stapel (102-2) von dünnen optischen dielektrischen Schichten gebildet wird, die auf eine Reliefstruktur (100-1) aufgebracht wurden.

9. Beleuchtungsvorrichtung nach Anspruch 8, wobei die Reliefstruktur (100-1) eine Prismastruktur ist.

10. Beleuchtungsvorrichtung nach Anspruch 8, wobei die Reliefstruktur (100-1) eine Pyramidenstruktur ist.

11. Beleuchtungsvorrichtung nach Anspruch 8 in Kombination mit Anspruch 2 und Anspruch 5, **dadurch gekennzeichnet, dass** die Kathode eine Matrixstruktur hat, die es zulässt, mehrere Zonen des Polarisators unabhängig zu adressieren, wobei jede Zone einem gegebenen farbigen Phosphorstreifen (b1, b2, b3) entspricht, um eine Leuchtdichte zu erhalten, die je nach der Farbe variiert.

12. Beleuchtungsvorrichtung nach Anspruch 11, wobei der Polarisator nach Phosphorstreifen in Abhängigkeit von der Emissionswellenlänge jedes Streifens optimiert ist.

13. Beleuchtungsvorrichtung nach Anspruch 4 oder 12, **dadurch gekennzeichnet, dass** die Kathode (100-1) eine Matrixstruktur hat, die eine differenzierte räumliche und zeitliche Steuerung in jeder Zone zulässt, um die Beleuchtung je nach dem Inhalt eines Bildes zu modulieren.

14. Beleuchtungsvorrichtung nach Anspruch 13, **dadurch gekennzeichnet, dass** sie ferner einen Diffusor (103) umfasst, der über dem Polarisator auf der Fluxemissionsseite und in einem Abstand (d) angeordnet ist, der in etwa der Teilung (p) der Streifen entspricht.

15. Anzeigegerät, das einen Flüssigkristallanzeigeschirm und eine Beleuchtungsvorrichtung nach einem der vorherigen Ansprüche umfasst, wobei die Vorrichtung auf der Rückseite des Anzeigeschirms montiert ist.
